# EUROPEAN PATENT SPECIFICATION

(11) **EP 2 693 533 B1**
(45) Date of publication and mention of the grant of the patent: **13.06.2018**
(21) Application number: 12179124.8
(22) Date of filing: 03.08.2012
(51) Int. Cl.: H01M 4/38, H01M 4/36, H01M 4/58, H01M 10/0525, H01M 4/62, H01M 4/02, H01M 4/04

(54) **Electrode active material for secondary battery**
Aktives Elektrodenmaterial für Sekundärbatterie
Matériau actif d'électrode pour batterie secondaire

(43) Date of publication of application: 05.02.2014
(73) Proprietor: LG Chem, Ltd., Seoul 07336 (KR)
(72) Inventor: Lee, Yong Ju, 305-727 Daejeon (KR); Kang, Yoon Ah, 135-092 Seoul (KR); Lee, Mi Rim, 138-240 Seoul (KR); Yoo, Jung Woo, Daejeon 302-828 (KR); Kim, Je Young, Daejeon 305-761 (KR)
(74) Representative: Goddar, Heinz J.

(56) References cited:
- EP-A2- 1 363 341
- EP-A2- 2 416 410
- CN-A- 102 157 731
- US-A1- 2007 224 508
- US-A1- 2009 311 606
- US-A1- 2012 100 438

## Description

### BACKGROUND OF THE INVENTION

### Field of the Invention

The present invention relates to an electrode active material for a secondary battery, and more particularly to an electrode active material comprising a porous silicon oxide-based composite and to a method for preparing a porous silicon oxide-based composite.

### Description of the Prior Art

Since the discovery of electricity in the 1800s, primary batteries have developed into secondary batteries, and batteries having low operating voltage have developed into batteries having high operating voltage. Among this variety of batteries, lithium secondary batteries are leading 21^{st} battery technology and are receiving attention as energy storage systems for a variety of applications, including mobile phones and electric vehicles.

Lithium secondary batteries are energy storage devices in which lithium ions move from the anode (negative electrode) to the cathode (positive electrode) during discharge and move from the cathode to the anode during charging when storing energy in the batteries. The lithium secondary batteries have high energy density and low self-discharge rate compared to other types of batteries, and thus are used in a wide range of applications.

General lithium secondary batteries comprise a cathode, an anode, an electrolyte and a separator. In early lithium secondary batteries, lithium metal was used as the anode active material, but was replaced with carbon-based materials such as graphite, because of safety concerns resulting from the repeated charge/discharge cycles. The potential of the electrochemical reaction of the carbon-based anode active material with lithium ions is similar to that of lithium metal, and the change in the crystal structure thereof during the intercalation/deintercalation of lithium ions is low. Thus, the carbon-based anode active material can be repeatedly charged and discharged and has excellent charge/discharge cycle characteristics.

However, in recent years, as the lithium secondary battery market has expanded from small-sized lithium secondary batteries for mobile devices to large-sized lithium secondary batteries for automobiles, there is a newfound need for a technology that can achieve the high capacity and high output of anode active materials. Thus, non-carbon-based anode active materials, including silicon, tin, germanium, zinc and lead-based materials, have been actively developed, which theoretically have capacities higher than carbon-based anode active materials.

Among these, silicon-based anode active materials have a capacity of 4190 mAh/g, which is 11 times higher than the theoretical capacity (372 mAh/g) of the carbon-based anode active materials, and thus have received attention as a substitute for the carbon-based anode active materials. However, in the case of using silicon alone as the anode active material, its volume expands by a factor of 3 or more when it is intercalated by lithium ions. For this reason, the battery capacity decreases as the number of charge/discharge cycles increases, and safety concerns also arise. Thus, in order to commercially use silicon as an anode active material, many studies are required into that battery.

As a result, studies on silicon-based composites have been actively conducted. Among these, studies have been made into the use of a silicon-based material in combination with a carbon-based material. This method was developed to minimize the volume expansion of the silicon active material in order to increase capacity and charge/discharge cycle characteristics. The most fundamental method for synthesizing the composite is to coat the silicon-based material with carbon. This improves the electrical conductivity between active material particles and the electrochemical properties and the properties of the electrochemical reaction with an electrolyte and reduces the volume expansion of the silicon-based particles, resulting in an increase in the battery lifetime. However, there is a problem in that the initial charge/discharge efficiency is deteriorated due to the formation of an irreversible phase by the silicon-based material during initial charge/discharge cycling. US 2012/100438 A1, US 2009/311606 A1, EP 2 416 410 A2, EP 1 363 341 A2 and CN 102 157 731 A all disclose the use of silicon- or silicon oxide-based composites, which are optionally coated with carbon, as electrode active material for lithium secondary batteries.

US 2007/224508 A1 and EP 2 372 816 A1 describe silicon-silicon oxide-lithium composites with a carbon coating, and the use thereof as negative electrode material.

### SUMMARY OF THE INVENTION

It is an object of the present invention to provide an electrode active material comprising porous silicon oxide-based composite for a secondary battery, which can improve the initial charge/discharge efficiency and capacity maintenance rate of the secondary battery and reduce the thickness change rate of the secondary battery to improve the lifetime characteristics.

The present invention provides an electrode active material comprising a porous silicon oxide-based composite, wherein the porous silicon oxide-based composite has lithium dispersed therein and carbon coated on the surface thereof, wherein the lithium is present in an amount of 2-15 wt% based on the total weight of the porous silicon oxide-based composite, and the porous silicon oxide-based composite has a BET specific surface area of 2-100 m²/g. The present invention also provides a method for preparing a porous silicon oxide-based composite as defined herein above, the method comprising: coating the surface of porous silicon oxide particles with carbon; and mixing the coated particles with a lithium precursor to prepare a mixture, and heat-treating the mixture.

### DETAILED DESCRIPTION OF THE INVENTION

The present invention provides an electrode active material comprising a porous silicon oxide-based composite, wherein the porous silicon oxide-based composite has lithium dispersed therein and carbon coated on the surface thereof, wherein the lithium is present in an amount of 2-15 wt% based on the total weight of the porous silicon oxide-based composite, and the porous silicon oxide-based composite has a BET specific surface area of 2-100 m²/g. The electrode active material according to the present invention comprises porous silicon oxide particles in order to overcome the above-described disadvantages of silicon-based materials, including expansion in thickness, and poor lifetime characteristics. In addition, according to the present invention, in order to overcome the problem that the initial charge/discharge efficiency of conventional electrode active materials is reduced due to the reaction between silicon oxide and lithium during initial charge/discharge cycles, the surface of the porous silicon oxide particles is coated with carbon, and then heat treatment is carried out to diffuse lithium into the porous silicon oxide particles, so that the initial charge/discharge efficiency of the electrode active material can be increased. The porous silicon oxide particles that are used as a starting material in the preparation of the electrode active material according to the embodiment of the present invention can be prepared by various methods.

The content of lithium in the electrode active material according to the embodiment of the present invention is 2-15 wt% based on the total weight of the porous silicon oxide-based composite. If the content of lithium is less than 2 wt%, the initial discharge/discharge efficiency will not be improved, and if it is more than 15 wt%, the safety of the battery can be reduced. In addition, the concentration of lithium dispersed in the porous silicon oxide-based composite is the highest at a portion near the carbon-coated surface and decreases toward the center of the porous silicon oxide-based composite.

The content of carbon in the electrode active material according to the embodiment of the present invention may be 2-30 wt% based on the total weight of the porous silicon oxide-based composite. If the content of carbon is less than 2 wt%, the carbon coating layer formed on the surface of the porous silicon oxide-based composite will not be uniform, and if it is more than 30 wt%, the battery capacity will be reduced, and the pores of the porous silicon oxide-based composite will be clogged with carbon so that the lifetime of the battery will be reduced.

The porous silicon oxide-based composite has a Brunauer, Emmett, and Teller (BET) specific surface area of 2 - 100 m²/g.

In porous silicon oxide-based composite according to one embodiment of the present invention, the silicon oxide may be silicon monoxide (SiO).

Moreover, the porosity of a porous silicon oxide-based composite according to one embodiment of the present invention may be 5-90% based on the total volume of the porous silicon oxide-based composite, the porous silicon oxide-based composite may have honeycomb-shaped pores formed on at least the surface or the surface and inside of the porous silicon oxide-based composite. If the porosity of the composite is less than 5%, the volume expansion of the electrode active material during charging/discharging will not be suppressed, and if it is more than 90%, the mechanical strength of the electrode active material will be reduced due to the presence of a large amount of pores in the electrode active material, and thus the electrode active material may break down during battery fabrication processes (slurry mixing, pressing after coating, etc.).

The particle size of the electrode active material may range from several tens of nm to several tens of µm, preferably 100 nm-50 µm.

In a porous silicon oxide based composite according to one embodiment of the present invention, the porous silicon oxide-based composite comprises a silicon phase, a SiOₓ (0<x<2) phase and the silicon dioxide phase may be dispersed in the SiOₓ phase, and the silicon phase and the silicon dioxide phase may be crystalline.

In a porous silicon oxide-based composite according to one embodiment of the present invention, x in the SiOₓ may be greater than 0 but smaller than 2, preferably 0.5-1.2, and the SiOₓ may be commercially easily available silicon monoxide (SiO). If the value of x is less than 0.5, the initial charge/discharge efficiency of the battery will be high, but the amount of oxygen which can suppress the volume expansion of the electrode will be small, and thus the lifetime of the electrode will be reduced and the degree of suppression of the expansion in the thickness of the electrode will be low, even though the electrode active material has a porous structure, and if the value of x is more than 1.2, the amount of oxygen will increase to reduce the initial charge/discharge efficiency of the battery.

In addition, in the porous silicon oxide-based composite, the silicon and the silicon dioxide may be present as nanometer-sized crystals in the active material particles.

Herein, the crystalline silicon has a size of 1-1000 nm, and the crystalline silicon dioxide has a size of 1-1000 nm. The silicon phase, the SiOₓ phase and the silicon dioxide phase, which are included in the electrode active material, can intercalate and deintercalate lithium.

The silicon phase and the silicon dioxide phase may be formed by disproportionation of SiOₓ (0<x<2). The concentration of the silicon phase in the porous silicon oxide-based composite is higher center portion than center-periphery portion of the porous silicon oxide-based composite, and the concentration of the silicon dioxide phase is higher center-periphery portion than center portion of the porous silicon oxide-based composite. The "center portion" refers to a portion inside a line corresponding to 50% of the maximum value of the length of the porous silicon oxide-based composite in the vertical direction from a line that is tangent to the porous silicon oxide-based composite, and the "center-periphery portion" refers to a portion outside the line corresponding to 50%. In addition, "a concentration higher center portion than center-periphery portion of the porous silicon oxide-based composite" means that the average concentration in the portion inside the line corresponding to 50% of the maximum value of diameter of the porous silicon oxide-based composite is higher than the average concentration in the portion outside the line.

The silicon dioxide phase may include cristoballite and may be present in an amount of 2-50 wt% based on the weight of the porous silicon oxide-based composite. If the amount of the silicon dioxide phase is less than 2 wt%, an increase in the initial charge/discharge efficiency of the battery will not be enough, and if it is more than 50 wt%, the initial discharge/discharge efficiency will increase, but the discharge capacity of the battery will decrease.

In addition, because pores are present on at least the surface or the surface and the inside of the porous silicon oxide-based composite, they can improve the battery capacity and can efficiently control the change in volume of the battery during charge/discharge cycles, thus improving the lifetime of the battery. Although the porous silicon oxide-based composite according to one embodiment of the present invention can be used as both a cathode active material and an anode active material, it may preferably be an anode active material.

The present invention also provides a secondary battery, which comprises a cathode comprising a cathode active material, a separator, an anode comprising an anode active material, and an electrolyte, wherein the cathode active material or the anode active material comprises a porous silicon oxide-based composite, which has lithium dispersed therein and carbon coating the surface thereof.

The electrode active material according to one embodiment of the present invention may be used in a secondary battery by mixing with a typically used electrode active material, and the typically used electrode active material may be one or more selected from the group consisting of graphite, soft carbon, hard carbon, and lithium titanium oxide.

The prepared electrode active material, specifically an anode active material, may be prepared as an anode by using a preparation method typically used in the art. For example, the anode active material of the present invention is mixed and stirred with a binder, a solvent, and a conductive material and a dispersant if necessary to prepare slurry, and then an anode may be prepared by coating a collector with the slurry and pressing.

Examples of the binder may be a vinylidene fluoride-hexafluoropropylene copolymer (PVDF-co-HEP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, tetrafluoroethylene, polyethylene, polypropylene, polyacrylate, a ethylene-propylene-diene monomer (EPDM), a sulfonated EPDM, a styrene-butadiene rubber (SBR), a fluoro rubber, and various copolymers.

N-methyl-2-pyrrolidone, acetone, or water may be used as the solvent.

The conductive material is not particularly limited so long as it does not cause chemical changes in the battery and has conductivity. For example, graphite such as natural graphite or artificial graphite; carbon black such as acetylene black, Ketjen black, channel black, furnace black, lamp black, and thermal black; conductive fibers such as carbon fibers or metal fibers; metal powders such as fluoro carbon powder, aluminum powder, and nickel powder; conductive whiskers such as zinc oxide whiskers and potassium titanate whiskers; conductive metal oxides such as titanium oxide; and conductive materials such as polyphenylene derivatives may be used as the conductive material.

An aqueous-based dispersant or an organic dispersant such as N-methyl-2-pyrrolidone may be used as dispersant.

Similar to the preparation of the foregoing anode, a cathode active material, a conductive material, a binder, and a solvent are mixed to prepare a slurry, and then a cathode may be prepared by directly coating a metal collector with the slurry or by casting the slurry on a separate support and laminating a cathode active material film separated from the support on a metal collector.

Examples of the cathode active material may be a layered compound, such as lithium cobalt oxide (LiCoO₂) or lithium nickel oxide (LiNiO₂), or a compound substituted with one or more transition metals; lithium manganese oxides such as Li_{1+y}Mn_{2-y}O₄ (where y is 0 to 0.33), LiMnO₃, LiMn₂O₃, and LiMnO₂; lithium copper oxide (Li₂CuO₂); vanadium oxides such as LiV₃O₈, LiFe₃O₄, V₂O₅, and Cu₂V₂O₇; nickel (Ni)-site type lithium nickel oxide expressed by a chemical formula of LiNi_{1-y}M_{y}O₂ (where M is cobalt (Co), manganese (Mn), aluminum (Al), copper (Cu), iron (Fe), magnesium (Mg), boron (B), or gallium (Ga), and y is 0.01 to 0.3); lithium manganese complex oxide expressed by a chemical formula of LiMn_{2-y}M_{y}O₂ (where M is Co, Ni, Fe, chromium (Cr), zinc (Zn), or tantalum (Ta), and y is 0.01 to 0.1) or Li₂Mn₃MO₈ (where M is Fe, Co, Ni, Cu, or Zn) ; LiMn₂O₄ having a part of lithium (Li) being substituted with an alkaline earth metal ion; a disulfide compound; and Fe₂(MoO₄)₃. However, the cathode active material is not limited thereto.

A typical porous polymer film used as a typical separator, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, may be used alone or in a lamination therewith as the separator. A typical porous nonwoven fabric, for example, a nonwoven fabric formed of high melting point glass fibers or polyethylene terephthalate fibers may be used, but the separator is not limited thereto.

In an electrolyte solution used in the present invention, a lithium salt, which may be included as an electrolyte, may be used without limitation so long as it is typically used in an electrolyte solution for a secondary battery. For example, one selected from the group consisting of F⁻, Cl⁻, I⁻, NO₃⁻, N(CN)₂⁻, BF₄⁻, ClO₄⁻ , PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃-, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻ may be used as an anion of the lithium salt.

In the electrolyte solution used in the present invention, an organic solvent included in the electrolyte solution may be used without limitation so long as it is typically used, and typically, one or more selected from the group consisting of propylene carbonate, ethylene carbonate, diethyl carbonate, dimethyl carbonate, ethylmethyl carbonate, methylpropyl carbonate, dipropyl carbonate, dimethyl sulfoxide, acetonitrile, dimethoxyethane, diethoxyethane, vinylene carbonate, sulfolane, γ-butyrolactone, propylene sulfite, and tetrahydrofuran may be used.

In particular, ethylene carbonate and propylene carbonate, ring-type carbonates among the carbonate-based organic solvents, well dissociate the lithium salt in the electrolyte solution due to high dielectric constants as high-viscosity organic solvents, and thus, the ring-type carbonate may be used. Since an electrolyte solution having high electrical conductivity may be prepared when the ring-type carbonate is mixed with low-viscosity, low-dielectric constant linear carbonate, such as dimethyl carbonate and diethyl carbonate, in an appropriate ratio, and thus, the ring-type carbonate, for example, may be used.

Selectively, the electrolyte solution stored according to the present invention may further include an additive, such as an overcharge inhibitor, included in a typical electrolyte solution.

A separator is disposed between the cathode and the anode to form a battery structure, the battery structure is wound or folded to put in a cylindrical battery case or prismatic battery case, and then a secondary battery is completed when the electrolyte is injected thereinto. Also, the battery structure is stacked in a bi-cell structure and then impregnated with the electrolyte solution, and a secondary battery is completed when the product thus obtained is put in a pouch and sealed.

The present invention also provides a method for preparing a porous silicon oxide-based composite, the method comprising: coating the surface of porous silicon oxide particles with carbon; and mixing the coated particles with a lithium precursor to prepare a mixture, and heat-treating the mixture.

In the method for preparing the porous silicon oxide-based composite according to the embodiment of the present invention, the process of coating the surface of the porous silicon oxide particles with carbon can be performed by supplying acetylene gas to the particles and heating the particles to which acetylene gas has been supplied, but is not limited thereto.

The porous silicon oxide particles coated with carbon are mixed with a lithium precursor and heat-treated, thereby preparing a porous silicon oxide-based composite. In the heat-treatment process, lithium can be diffused into the porous silicon oxide particles coated with carbon, wherein the carbon functions as a diffusion layer that allows lithium to be diffused into the porous silicon oxide particles.

The lithium precursor may comprise one or more selected from the group consisting of LiOH·H₂O, LiCl, LiCH₃COO ·2H₂O, Li₂SO₄, Li₃PO₄, and salts thereof.

The heat-treatment process may be carried out at 500-1200 °C for 2-10 hours. If the heat-treatment temperature is lower than 500 °C, the lithium precursor will not be sufficiently dissolved or lithium will not be dispersed into the porous silicon oxide particles, and if it is higher than 1200 °C, crystalline silicon in the porous silicon oxide particles will excessively grow.

In the method for preparing the porous silicon oxide-based composite according to the embodiment of the present invention, the process of preparing the porous silicon oxide particles may comprise: mixing a fluorine-based solution with a metal precursor solution, and bringing the mixture into contact with SiOₓ (0<x<2) particles, thus electrodepositing metal particles on the surface of the SiOₓ particles; bringing the metal particle-electrodeposited SiOₓ particles into contact with an etching solution, thus etching the SiOₓ particles; and bringing the etched SiOₓ particles into contact with a metal removing solution , thus removing the metal particles.

In the method for preparing the porous silicon oxide-based composite according to the embodiment of the present invention, the process of preparing the porous silicon oxide particles comprises mixing a fluorine-based solution with a metal precursor solution and bringing the mixture into contact with SiOₓ, thus electrodepositing metal particles of the metal precursor solution on the SiOₓ particles. Herein, the fluorine-based solution causes to the SiOₓ particles to donate electrons, and the metal ions in the solution are reduced by accepting the donated electrons, and thus are electrodeposited on the surface of SiOₓ particles. Once the metal particles are electrodeposited on the surface of the SiOₓ particles, the metal particles themselves act as catalytic sites, and thus are continuously electrodeposited on the surface. The SiOₓ particles may be SiOₓ (0<x<2) .

The fluorine-based solution that is used in the present invention may be one or more selected from the group consisting of hydrogen fluoride (HF), fluorosilicate (H₂SiF₆) and ammonium fluoride (NH₄F), and the metal precursor solution may comprise one or more selected from the group consisting of silver (Ag), gold (Au), platinum (Pt) and copper (Cu). The fluorine-based solution and the metal precursor solution can be mixed with each other at a volume ratio of 10-90: 90-10. If the fluorine-based solution is used at a volume ratio of less than 10: 90 in the mixing process, the amount of metal particles electrodeposited on the surface of the SiOₓ particles will be small and the reaction rate will be slow, and thus the time taken to prepare the electrode active material will be increased, and if it is used at a volume ratio of more than 90:10 in the mixing process, the rate at which the metal particles are electrodeposited on the surface of the SiOₓ particles will be very high, making it impossible to electrodeposit metal particles having a uniform and small size on the surface of the SiOₓ particles.

Moreover, the amount of metal particles electrodeposited on the surface of the SiOₓ particles can be controlled according to the concentration of the fluorine-based solution and the contact time between the SiOₓ particles and the metal precursor solution, and the SiOₓ particles may be used in an amount of 0.001-50 parts by weight based on 100 parts by weight of the mixed solution of the fluorine-based solution and the metal precursor solution. In this etching process, nanopores, mesopores and macropores are formed in the SiOₓ particles.

Etching of the SiOₓ particles is carried out in the following manner. The metal particles are oxidized to metal ions by H₂O₂, and the SiOₓ particles continuously enter the solution at the interface between the SiOₓ particles and the metal particles while transferring electrons to the metal particles. Also, the oxidized metal ions are reduced on the metal particles electrodeposited on the surface of the SiOₓ particles. In this way, the SiOₓ particles that have been brought into contact with the metal particles can be continuously etched, and thus a honeycomb-shaped porous structure can be formed on at least the surface of the SiOₓ particles. During the etching process, the size of the metal particles increases, because the metal particles have a strong tendency to agglomerate with the adjacent metal particles in the etching solution.

The etching solution that is used in the present invention may be a mixed solution of a hydrogen fluoride (HF) solution and a hydrogen peroxide (H₂O₂) solution. The content of the hydrogen fluoride solution in the mixed solution can vary depending on the degree of etching, but the hydrogen fluoride (HF) solution and the hydrogen peroxide (H₂O₂) solution are preferably mixed with each other at a volume ratio of 10-90: 90-10. Herein, the content of H₂O₂ plays an important role in the formation of mesopores in the SiOₓ particles, and the amount of oxidation of the metal particles can be determined by the concentration of H₂O₂, so that the concentration of metal ions can be determined. The metal particles are oxidized to metal ions by H₂O₂, and the metal ions start to adhere to specific defective sites (e.g., etched SiOₓ portions), and the bottom of the SiOₓ particles having the metal particles attached thereto is etched, thus forming mesopores.

In addition, the etching process may be carried out for 30 minutes to 5 hours. If the etching process is carried out for less than 30 minutes, the formation of pores in the SiOₓ particles will be insignificant, and if it is carried out for more than 5 hours, the SiOₓ particles will be excessively etched, so that the mechanical properties of the SiOₓ particles will be deteriorated.

The metal removing solution that is used in the present invention may be one or more selected from the group consisting of nitric acid (HNO₃), sulfuric acid (H₂SO₄) and hydrochloric acid (HCl).

In the method for preparing the porous silicon oxide-based composite according to the embodiment of the present invention, the process of preparing the porous silicon oxide particles may further comprise, after removing the metal particles, mixing the SiOₓ particles with a polar solvent containing an alkaline hydroxide dissolved therein, evaporating the polar solvent from the SiOₓ particles mixed with the polar solvent, and then heating the SiOₓ particles.

The alkaline hydroxide that is used in the present invention may be one or more selected from the group consisting of LiOH, NaOH, KOH, Be(OH)₂, Mg(OH), Ca(OH)₂, and hydrates thereof.

As the solvent in which the alkaline hydroxide is dissolved, any solvent may be used, as long as it can dissolve the alkaline hydroxide and can easily be removed. Examples of the solvent include, but are limited to, water and an alcohol solvent. The alcohol solvent may be ethanol or methanol.

In the step of mixing the alkaline hydroxide with SiOₓ, SiOₓ may be used in an amount of 0.01-30 wt% based on the total weight of the mixture. If the amount of SiOₓ is less than 0.01 wt%, the initial efficiency of the electrode active material will be low because the amount of silicon and silicon dioxide formed after heating is small (SiOₓ is partially converted to Si-SiO₂ by heating, and the content of Si-SiO₂ in Si-SiOₓ-SiO₂ is reduced due to a low content of SiOₓ), and if it is more than 30 wt%, the capacity of the electrode active material will be greatly reduced because the amount of Si-SiO₂ formed after heating is large.

Evaporating the polar solvent can be carried out at 80-120 °C and can be carried out in an alumina boat preheated to 80-120 °C. However, evaporation of the polar solvent may also be carried out at any temperature at which the polar solvent can be evaporated. Meanwhile, despite evaporation of the polar solvent, the alkaline hydroxide remains on the surface of SiOₓ particles.

The mixture remaining after evaporation of the polar solvent can be heated at a temperature of 750-1000 °C for 5-120 minutes. If the heating temperature is lower than 750 °C, crystalline silicon dioxide will not form, and if it is higher than 1000 °C, a large amount of crystalline silicon will be produced to reduce the lifetime characteristics of the secondary battery and cause an excessive amount of energy to be consumed. In addition, the heating time is shorter than 5 minutes, crystalline silicon dioxide will not form easily, and if it is longer than 120 minutes, it will not be preferable in terms of energy efficiency, because it is significantly longer than the time required to form crystalline silicon dioxide.

When the heating is carried out, the SiOₓ particles are disproportionated into silicon and amorphous silica (SiO₂). Specifically, oxygen in SiOₓ moves to the outside (surface) to form amorphous SiO₂, and silicon separated from oxygen binds to another silicon separated from oxygen to form a silicon crystal which is present in SiOₓ phase, and amorphous SiO₂ is formed mainly on the outside (surface) rather than inside the SiOₓ particles. As the heating temperature or time increases, amorphous SiOₓ gradually decreases and crystalline Si and crystalline SiO₂ increase.

In the present invention, the heating is carried out in a state in which the alkaline hydroxide is present on the surface of SiOₓ particles, thereby promoting the formation of crystalline SiO₂. When the alkaline hydroxide is not used, the crystalline peak of SiO₂ is not formed, even when the heating is carried out at the same temperature. However, when the alkaline hydroxide is used, the intensity of the crystalline peak of SiO₂ significantly increases (around 2 Theta=21°) while a Si crystal grows. Specifically, in the prior art in which the heating is carried out in order to form a composite of SiO and carbon or in order to coat SiO with a carbon precursor or carbon, only Si crystals grow (around 2 Theta=28.5° in the XRD), whereas in the present invention in which the heating is carried out in a state in which the alkaline hydroxide is present on the surface of SiOₓ, crystalline SiO₂ grows, and initial efficiency (discharge capacity/charge capacity × 100; the ratio of lithium first charged into the silicon-based compound to the amount of lithium first discharged from the silicon-based compound) increases. Grown crystalline SiO₂ is electrochemically inactive (non-reactive with lithium), and SiOₓ is divided into an electrochemically active portion (reactive with lithium) and an electrochemically inactive portion. It is believed that, because the molar concentration of oxygen relative to Si in the electrochemically active portion of SiOₓ is lower than that in SiO, the initial efficiency increases.

In addition, the process of preparing the porous silicon oxide particles may additionally comprise the step of filtering the above-heated SiOₓ particles.

The filtration step is carried out to remove the alkaline hydroxide from the surface of the heated SiOₓ particles. This step can be performed by allowing the resulting mixture to stand in distilled water so that the alkaline hydroxide adhering to the surface of the porous silicon-based electrode active material is removed.

Hereinafter, the present invention will be described in further detail with reference to the preferred examples. It is to be understood, however, that these examples are for illustrative purposes only and are not intended to limit the scope of the present invention.

### Example 1: Preparation of porous silicon oxide-based composite 1

### Coating surface of porous silicon oxide particles with carbon

20 g of porous silicon oxide particles were introduced into a rotary tube furnace, and argon gas was supplied into the furnace at a rate of 0.5 L/min, and then the internal temperature of the rotary tube furnace was increased to 800 °C at a rate of 5 °C/min. While the rotary tube furnace was rotating at a speed of 10 rpm, the porous silicon oxide particles were reacted for 3 hours while argon gas and acetylene gas were supplied into the furnace at rates of 1.8 L/min and 0.3 L/min, respectively, thereby preparing porous silicon oxide particles coated with carbon. The prepared porous silicon oxide particles had a carbon content of 5 wt%.

### Coupling of lithium to carbon-coated porous silicon oxide particles

The carbon-coated porous silicon oxide particles prepared as described above and LiOH·H₂O were mixed with each other at a weight of 65:35 and heat-treated at 700 °C for 5 hours in an argon atmosphere, thereby preparing a porous silicon oxide-based composite having a core-shell structure. The prepared porous silicon oxide-based composite had a lithium content of 8 wt%.

### Example 2: Preparation of electrode active material 1 Electrodeposition of Ag on surface of silicon monoxide

300 Mℓ of a solution of 10 mole% hydrogen fluoride (HF) was mixed with 300Mℓ of a solution of 10 mM silver nitrate (AgNO₃) for 10 minutes. 2 g of silicon monoxide (SiO) was added to and mixed with the mixed solution of fluoride hydrogen and silver nitrate for 5 minutes, after which the mixture was filtered, washed and dried, thereby preparing Ag-electrodeposited silicon monoxide.

### Chemical etching

200 Mℓ of a solution of 5 mole% hydrogen fluoride and 100 Mℓ of a solution containing 1.5 wt% of hydrogen peroxide (H₂O₂) were mixed with each other for 10 minutes. The Ag particle-electrodeposited silicon monoxide was added to and mixed with the etching solution consisting of the hydrogen fluoride/hydrogen peroxide mixture for 30 minutes, after which the resulting mixture was filtered, washed and dried, thereby preparing porous silicon monoxide.

### Removal of Ag

100 Mℓ of 60 mole% nitric acid (HNO₃) was heated to 50 °C, and then the above-prepared porous silicon monoxide was added thereto and the mixture was mixed for 2 hours. Then, the mixture was filtered, washed and dried, thereby preparing porous silicon monoxide from which Ag was removed.

### Mixing of alkaline hydroxide and silicon-based material

1 g of the above-prepared porous silicon monoxide was added to a solution of 50 mg of sodium hydroxide in ethanol and stirred for 10 minutes or more.

### Solvent evaporation and heating

The above-prepared solution containing porous silicon monoxide and sodium hydroxide was placed in an alumina boat that has been heated to 80-120 °C, and ethanol was evaporated from the solution in the alumina boat. After the solvent had completely evaporated, the alumina boat containing the porous silicon monoxide/sodium hydroxide mixture was placed in a quartz tube furnace in which the mixture was then heated at 800 °C for 5 minutes in an argon atmosphere. Then, the quartz tube furnace was cooled to room temperature, thereby preparing porous silicon oxide particles.

### Immersion in solvent, followed by filtration

The porous silicon oxide particles were recovered from the alumina boat and immersed in distilled water, after which the solution was filtered, thereby removing sodium hydroxide from the porous silicon oxide particles.

### Example 3: Preparation of electrode active material 2

Porous silicon oxide particles were prepared in the same manner as Example 2, except that the Ag particle-electrodeposited silicon monoxide was added to and mixed with the etching solution consisting of the hydrogen fluoride/hydrogen peroxide mixture for 5 hours.

### Example 4: Preparation of electrode active material 3

Porous silicon oxide particles were prepared in the same manner as Example 2, except that the heating the mixture was carried out for 120 minutes.

### Example 5: Preparation of electrode active material 4

Porous silicon oxide particles were prepared in the same manner as Example 2, except that the Ag particle-electrodeposited silicon monoxide was added to and mixed with the etching solution consisting of the hydrogen fluoride/hydrogen peroxide mixture for 5 hours and that the heating the mixture was carried out for 120 minutes.

### Example 6 to 9: Preparation of electrode active material having carbon coating layer formed thereon

Each of 20 g porous silicon oxide particles prepared in Example 2, 3, 4 and 5 were introduced into a rotary tube furnace, and argon gas was supplied into the furnace at a rate of 0.5 L/min, and then the internal temperature of the rotary tune furnace was increased to 800 °C at a rate of 5 °C/min. While the rotary tube furnace was rotating at a speed of 10 rpm, the electrode active material was heat-treated for 5 hours while argon gas and acetylene gas were supplied to the furnace at rates of 1.8 L/min and 0.3 L/min, respectively, thereby preparing a porous silicon oxide-based electrode active material having a conductive carbon coating layer formed thereon. The carbon content of the conductive carbon coating layer was 10 wt% based on the weight of the electrode active material.

### Example 10: Preparation of porous silicon oxide-based composite 2

The carbon-coated porous silicon oxide particles prepared in Example 6 and LiOH·H₂O were mixed with each other at a weight ratio of 65:35 and heat-treated at 700 °C for 5 hours in an argon atmosphere, thereby preparing a porous silicon oxide-based composite. The prepared porous silicon oxide-based composite had a lithium content of 8 wt%.

### Example 11 to 20: Fabrication of secondary battery

Each of material, prepared in Example 1 to 10, was used as an anode active material, acetylene black was used as a conductive material, and polyvinylidene fluoride (PVdF) was used as a binder, and these were mixed with each other at a weight ratio of 85:5:10. The mixture was dissolved in the solvent N-methyl-2-pyrrolidone, thereby preparing slurry. The prepared slurry was applied to one surface of a copper current collector to a thickness of 65 µm, and the resulting structure was dried, rolled, and punched to a desired size, thereby fabricating an anode.

Meanwhile, ethylene carbonate and diethyl carbonate were mixed with each other at a volume ratio of 30:70 to prepare a non-aqueous electrolyte solvent, and LiPF₆ was added to the non-aqueous electrolyte solvent, thereby preparing a non-aqueous electrolyte of 1M LiPF₆.

A lithium metal foil was used as a counter electrode. A polyolefin separator was interposed between the anode and the counter electrode, and then the electrolyte was injected into the resulting structure, thereby fabricating a coin-type battery.

### Comparative Example 1

A secondary battery was fabricated in the same manner as Example 11, except that non-porous silicon monoxide was used as the anode active material.

### Comparative Example 2

A secondary battery was fabricated in the same manner as Example 11, except that a conductive carbon coating layer was formed on non-porous silicon monoxide in the same manner as Example 6.

### Comparative Example 3

The carbon-coated silicon monoxide prepared in Comparative Example 1 and LiOH·H₂O were mixed with each other at a weight ratio of 65:35 and heat-treated at 700 °C for 5 hours in an argon atmosphere, thereby preparing a silicon monoxide-based composite having lithium dispersed therein and carbon coating the surface thereof. Then, using the prepared carbon monoxide, a secondary battery was fabricated in the same manner as Example 11.

### Test Example 1: Analysis of lifetime and thickness change rate

In order to examine the lifetime characteristics and thickness change rates of the secondary batteries fabricated in Examples 11 to 20 and Comparative Examples 1 and 3, the following tests were carried out.

The lifetime of each of the batteries was measured by repeating the charge/discharge cycles at 0.5 C after the second cycle and was expressed as the ratio of the 49^{th} cycle discharge capacity to the first-cycle discharge capacity.

Each of the secondary batteries was disassembled after the 50^{th} cycle charge, and the thickness of the electrode in each battery was measured. Then, the difference in thickness of the measured electrode from that of the electrode measured before charging was determined and expressed as the thickness change rate of each battery.

Table 1 below shows the porosity, lifetime and thickness change rate of each of the secondary batteries fabricated in Examples 11 to 20 and Comparative Examples 1 and 3.

**[Table 1]**

| Examples | BET (m²/g) | Porosity (%) | lifetime (%) | Thickness change rate (%) |
|---|---|---|---|---|
| Eample 11 | 41.5 | 40 | 94 | 84 |
| Example 12 | 13.5 | 10 | 89 | 160 |
| Example 13 | 97.9 | 71 | 98 | 44 |
| Example 14 | 10.2 | 8 | 91 | 44 |
| Example 15 | 95.4 | 68 | 97 | 49 |
| Example 16 | 13.4 | 9 | 91 | 147 |
| Example 17 | 93.6 | 65 | 99 | 41 |
| Example 18 | 8.3 | 7 | 93 | 153 |
| Example 19 | 87.9 | 58 | 98 | 47 |
| Example 20 | 13.9 | 11 | 92 | 145 |
| Comparative Example 1 | 12 | 0 | 85 | 194 |
| Comparative Example 2 | 1.6 | 0 | 87 | 178 |
| Comparative Example 2 | 1.5 | 0 | 83 | 182 |

| | | | | |
|---|---|---|---|---|
| - lifetime (49^{th} cycle discharge charge/1^{st} cycle discharge capacity) x 100 - Thickness change rate: (electrode thickness after 50^{th} cycle charge - electrode thickness before charging)/electrode thickness before charging ×100 | | | | |

As can be seen in Table 1 above, the lifetime of the secondary batteries fabricated in Examples 11 to 20 was increased by 4-15% compared to that of the secondary batteries fabricated in Comparative Examples 1 to 3, and the thickness change rate thereof was different by 22-153% from that of the secondary batteries fabricated in Comparative Examples 1 to 3. Thus, it can be seen that, because the electrode active materials prepared in the Examples of the present invention include not only oxygen, unlike prior Si-based electrode active materials, but also a large number of pores, the lifetime and swelling characteristics of the batteries were greatly improved.

### Test Example 2: Analysis of charge/discharge characteristics and initial efficiency

In order to examine the charge/discharge characteristics and initial efficiencies of the secondary batteries fabricated in Examples 11 to 20 and Comparative Examples 1 to 3, the following tests were carried out.

To examine the charge/discharge characteristics of the secondary batteries fabricated in Examples 11 to 20 and Comparative Examples 1 to 3, each of the batteries was charged with a constant current to 5 mV, and then charged until the current reached 0.005 C at 5 mV. Each of batteries was discharged with a constant current to 1.5 V.

Table 2 below shows the discharge capacity, charge capacity and initial efficiency of each of the secondary batteries fabricated in Examples 11 to 20 and Comparative Examples 1 to 3.

**[Table 2]**

| Examples | Discharge capacity (mAh/g) | Charge capacity (mAh/g) | Initial efficiency (%) |
|---|---|---|---|
| Example 11 | 1457.0 | 1622.5 | 89.8 |
| Example 12 | 1575.6 | 2021.8 | 77.9 |
| Example 13 | 1580.5 | 2025.4 | 78.0 |
| Example 14 | 1083.9 | 1380.5 | 78.5 |
| Example 15 | 1085.2 | 1381.7 | 78.5 |
| Example 16 | 1526.5 | 1853.9 | 82.3 |
| Example 17 | 1530.1 | 1857.2 | 82.4 |
| Example 18 | 1048.1 | 1262.4 | 83.0 |
| Example 19 | 1049.8 | 1262.8 | 83.1 |
| Example 20 | 1405.2 | 1490.1 | 94.3 |
| Comparative Example 1 | 1653.8 | 2355.8 | 70.2 |
| Comparative Example 2 | 1575.0 | 2114.1 | 74.5 |
| Comparative Example 1 | 1452.0 | 1627.8 | 89.2 |

As can be seen in Table 2 above, the discharge capacities of the secondary batteries fabricated in Examples 11 to 19 were somewhat lower than that of the secondary battery fabricated in Comparative Example 1, but the initial efficiencies thereof were at least about 8% higher than that of the secondary battery fabricated in Comparative Example 1. In addition, the initial efficiencies of the secondary batteries fabricated in Examples 11 to 19 were at least about 8% higher than that of the secondary battery fabricated in Comparative Example 2. Meanwhile, Comparative Example 3 was as high as Example 11, but the lifetime and thickness change rate was low as described above.

Moreover, in the case of Example 20, the battery capacity was slightly reduced by an extent corresponding to the content of lithium, but the initial efficiency significantly increased to 94.3%. Thus, it is believed that the increase in the initial efficiency is because an alkaline hydroxide (e.g., NaOH) is used in the preparation of the porous silicon oxide particles and a disproportionation reaction occurs during the heat-treatment process and that the presence of lithium in the porous silicon oxide particles additionally increases the initial efficiency. In addition, it can be seen that the degree of expansion in the thickness of the electrode active material of Example 20 was similar to that in Example 6, because a large number of pores were formed in the electrode active material of Example 20.

An electrode active material according to one embodiment of the present invention includes pores formed on the surface and inside of a silicon oxide, and thus a secondary battery comprising the same has a high capacity. In addition, the change in the volume of the electrode active material during charge/discharge cycles can be efficiently controlled, and thus the lifetime characteristics of the battery can be improved. Furthermore, because the porous silicon oxide particles in the electrode active material have lithium dispersed therein and carbon coating the surface thereof, the initial charge/discharge efficiency of the electrode active material of the present invention is increased over that of prior silicon-based electrode active materials. Accordingly, the electrode active material of the present invention is useful as an electrode active material for a secondary battery.

## Claims

1. An electrode active material comprising a porous silicon oxide-based composite, wherein the porous silicon oxide based composite has lithium dispersed therein and carbon coated on a surface thereof, and
wherein the lithium is present in an amount of 2-15 wt% based on the total weight of the porous silicon oxide-based composite, and
the porous silicon oxide-based composite has a BET specific surface area of 2-100 m²/g.

2. The electrode active material of claim 1, wherein the carbon is present in an amount of 2-30 wt% based on the total weight of the porous silicon oxide-based composite.

3. The electrode active material of claim 1, wherein a concentration of lithium dispersed in the porous silicon oxide-based composite is the highest at a portion near the carbon-coated surface and decreases toward a center of the porous silicon oxide-based composite.

4. The electrode active material of claim 1, wherein the silicon oxide in the porous silicon oxide-based composite is silicon monoxide.

5. The electrode active material of claim 1, wherein the porous silicon oxide-based composite comprises a SiOₓ (0<x<2) phase.

6. The electrode active material of claim 1, wherein the porous silicon oxide-based composite comprises a silicon phase, a SiOₓ (0<x<2) phase and a silicon dioxide phase and has a porosity of 5-90%.

7. The electrode active material of claim 6 wherein the silicon dioxide phase is dispersed in the SiOₓ phase.

8. The electrode active material of claim 6, wherein the silicon dioxide phase is crystalline.

9. The electrode active material of claim 6, wherein a concentration of the silicon phase of center portion of the porous silicon oxide-based composite is higher than a concentration of the silicon phase of center-periphery portion of the porous silicon oxide-based composite.

10. The electrode active material of claim 6, wherein a concentration of the silicon dioxide phase of center-periphery portion of the porous silicon oxide-based composite is higher than a concentration of the silicon dioxide phase of center portion of the porous silicon oxide-based composite.

11. The electrode active material of claim 6, wherein the silicon phase and the silicon dioxide phase are formed by disproportionation of SiOₓ(0<x<2),

12. A secondary battery, which comprises a cathode comprising a cathode active material, a separator, an anode comprising an anode active material, and an electrolyte, wherein the cathode active material or the anode active material comprises the electrode active material of any one of claims 1 to 11.

13. A method for preparing a porous silicon oxide-based composite according to claim 1, the method comprising:
coating the surface of porous silicon oxide particles with carbon; and mixing the coated particles with a lithium precursor to prepare a mixture, and heat-treating the mixture.

14. The method of claim 13, wherein the lithium precursor is selected from the group consisting of LiOH·H₂O, LiCl, LiCH₃COO ·2H₂O, Li₂SO₄, Li₃PO₄, and salts thereof.

15. The method of claim 13, wherein the heat-treatment is carried out at 500-1200 °C for 2-10 hours.

16. The method of claim 13, wherein a process for preparation of the porous silicon oxide particles comprises:
mixing a fluorine-based solution with a metal precursor solution to prepare a mixed solution, and bringing the mixed solution into contact with SiOₓ(0<x<2) particles to electrodeposit metal particles on the surface of the SiOₓ particles;
etching the metal particle-electrodeposited SiOₓ particles by contact with an etching solution; and
removing the metal particles from the etched SiOₓ particles by contact with a metal removing solution.

17. The method of claim 16, wherein the process for preparation of the porous silicon oxide further comprises, after removing the metal particles, mixing the SiOₓ particles with a polar solvent containing an alkaline hydroxide dissolved therein, evaporating the polar solvent from the SiOₓ particles mixed with the polar solvent, and then heating the SiOₓ particles.

## Patentansprüche

1. Elektrodenaktivmaterial, umfassend einen porösen Siliziumoxid-basierten Verbundstoff, wobei der poröse Siliziumoxid-basierte Verbundstoff Lithium, das darin dispergiert ist, und Kohlenstoff, der auf einer Oberfläche davon beschichtet ist, hat, und
wobei das Lithium in einer Menge von 2 - 15 Gew.-%, bezogen auf das Gesamtgewicht des porösen Siliziumoxid-basierten Verbundstoffs, vorhanden ist, und
der poröse Siliziumoxid-basierte Verbundstoff eine BET spezifische Oberflächenfläche von 2 - 100 m²/g hat.

2. Elektrodenaktivmaterial nach Anspruch 1, wobei der Kohlenstoff in einer Menge von 2 - 30 Gew.-%, bezogen auf das Gesamtgewicht des porösen Siliziumoxid-basierten Verbundstoffs, vorhanden ist.

3. Elektrodenaktivmaterial nach Anspruch 1, wobei eine Konzentration des Lithiums, das in dem porösen Siliziumoxid-basierten Verbundstoff dispergiert ist, in einem Teil nah an der Kohlenstoff-beschichteten Oberfläche am höchsten ist und zum Zentrum des porösen Siliziumoxid-basierten Verbundstoffs hin abnimmt.

4. Elektrodenaktivmaterial nach Anspruch 1, wobei das Siliziumoxid in dem porösen Siliziumoxid-basierten Verbundstoff Siliziummonoxid ist.

5. Elektrodenaktivmaterial nach Anspruch 1, wobei der poröse Siliziumoxid-basierte Verbundstoff eine SiOₓ(0<x<2)-Phase umfasst.

6. Elektrodenaktivmaterial nach Anspruch 1, wobei der poröse Siliziumoxid-basierte Verbundstoff eine Siliziumphase, eine SiOₓ(0<x<2)-Phase und eine Siliziumdioxidphase umfasst und eine Porosität von 5 - 90% hat.

7. Elektrodenaktivmaterial nach Anspruch 6, wobei die Siliziumdioxidphase in der SiOₓ-Phase dispergiert ist.

8. Elektrodenaktivmaterial nach Anspruch 6, wobei die Siliziumdioxidphase kristallin ist.

9. Elektrodenaktivmaterial nach Anspruch 6, wobei eine Konzentration der Siliziumphase des Zentralteils des porösen Siliziumoxid-basierten Verbundstoffs größer ist als eine Konzentration der Siliziumphase des zum Zentrum peripheren Teils des porösen Siliziumoxid-basierten Verbundstoffs.

10. Elektrodenaktivmaterial nach Anspruch 6, wobei eine Konzentration der Siliziumdioxidphase des zum Zentrum peripheren Teils des porösen Siliziumoxid-basierten Verbundstoff größer ist als eine Konzentration der Siliziumdioxidphase des zentralen Teils des porösen Siliziumoxid-basierten Verbundstoffs.

11. Elektrodenaktivmaterial nach Anspruch 6, wobei die Siliziumphase und die Siliziumdioxidphase durch Disproportionierung von SiOₓ (o<x<2) gebildet werden.

12. Sekundärbatterie, umfassend eine Kathode, die ein kathodenaktives Material umfasst, einen Separator, eine Anode, die ein anodenaktives Material umfasst, und ein Elektrolyt, wobei das kathodenaktive Material oder das anodenaktive Material das Elektrodenaktivmaterial nach einem der Ansprüche 1 bis 11 umfasst.

13. Verfahren zum Herstellen eines porösen Siliziumoxid-basierten Verbundstoffs nach Anspruch 1, das Verfahren umfassend:
Beschichten der Oberfläche von porösen Siliziumoxidpartikeln mit Kohlenstoff und Mischen der beschichteten Partikel mit einem Lithiumvorläufer, um ein Gemisch herzustellen, und Behandeln des Gemischs mit Wärme.

14. Verfahren nach Anspruch 13, wobei der Lithiumvorläufer aus der Gruppe ausgewählt ist, bestehend aus LiOH·H₂O, LiCl, LiCH₃COO·2H₂O, Li₂SO₄, Li₃PO₄ und Salzen davon.

15. Verfahren nach Anspruch 13, wobei die Behandlung mit Wärme bei 500 - 1200°C für 2 - 10 Stunden durchgeführt wird.

16. Verfahren nach Anspruch 13, wobei ein Verfahren zum Herstellen der porösen Siliziumoxidpartikel umfasst:
Mischen einer fluorbasierten Lösung mit einer Metallvorläuferlösung, um eine gemischte Lösung herzustellen und in Kontaktbringen der gemischten Lösung mit SiOₓ (o<x<2)-Partikel durch Elektroabscheiden von Metallpartikeln auf der Oberfläche der SiOₓ-Partikel;
Ätzen der SiOₓ-Partikel, auf denen die Metallpartikel durch Inkontaktbringen mit einer Ätzlösung elektroabgeschieden sind; und
Entfernen der Metallpartikel von den geätzten SiOₓ-Partikeln durch Inkontaktbringen mit einer Metallentfernungslösung.

17. Verfahren nach Anspruch 16, wobei das Verfahren zum Herstellen des porösen Siliziumoxids ferner umfasst, nach dem Entfernen der Metallpartikel, Mischen der SiOₓ-Partikel mit einem polaren Lösungsmittel enthaltend ein Alkalihydroxid, das hierin gelöst ist, Verdampfen des polaren Lösungsmittels von den SiOₓ-Partikeln, die mit dem polaren Lösungsmittel vermischt sind und dann Erhitzen der SiOₓ-Partikel.

## Revendications

1. Un matériau d'électrode actif comprenant un composite à base d'oxyde de silicium poreux,
dans lequel le composite à base d'oxyde de silicium poreux a du lithium dispersé dans celui-ci et du carbone revêtu sur une surface de celui-ci, et
dans lequel le lithium est présent dans une quantité comprise entre 2 et 15% en poids sur la base du poids total du composite à base d'oxyde de silicium poreux, et
le composite à base d'oxyde de silicium poreux a une surface spécifique BET comprise entre 2 et 100 m²/g.

2. Le matériau d'électrode actif selon la revendication 1, dans lequel le carbone est présent dans une quantité comprise entre 2 et 30% en poids sur la base du poids total du composite à base d'oxyde de silicium poreux.

3. Le matériau d'électrode actif selon la revendication 1, dans lequel une concentration de lithium dispersé dans le composite à base d'oxyde de silicium poreux est la plus élevée à une partie proche de la surface revêtue de carbone et diminue vers un centre du composite à base d'oxyde de silicium poreux.

4. Le matériau d'électrode actif selon la revendication 1, dans lequel l'oxyde de silicium dans le composite à base d'oxyde de silicium poreux est le monoxyde de silicium.

5. Le matériau d'électrode actif selon la revendication 1, dans lequel le composite à base d'oxyde de silicium poreux comprend une phase SiOₓ (0<x<2).

6. Le matériau d'électrode actif selon la revendication 1, dans lequel le composite à base d'oxyde de silicium poreux comprend une phase silicium, une phase SiOₓ (0<x<2) et une phase dioxyde de silicium et a une porosité comprise entre 5 et 90%.

7. Le matériau d'électrode actif selon la revendication 6 dans lequel la phase dioxyde de silicium est dispersée dans la phase SiOₓ.

8. Le matériau d'électrode actif selon la revendication 6, dans lequel la phase dioxyde de silicium est cristalline.

9. Le matériau d'électrode actif selon la revendication 6, dans lequel une concentration de la phase silicium de la partie centrale du composite à base d'oxyde de silicium poreux est plus élevée qu'une concentration de la phase silicium de la partie centrale-périphérique du composite à base d'oxyde de silicium poreux.

10. Le matériau d'électrode actif selon la revendication 6, dans lequel une concentration de la phase dioxyde de silicium de la partie centrale-périphérique du composite à base d'oxyde de silicium poreux est plus élevée qu'une concentration de la phase dioxyde de silicium de la partie centrale du composite à base d'oxyde de silicium poreux.

11. Le matériau d'électrode actif selon la revendication 6, dans lequel la phase silicium et la phase dioxyde de silicium sont formées par disproportionement du SiOₓ (0<x<2).

12. Une batterie rechargeable, qui comprend une cathode comprenant un matériau de cathode actif, un séparateur, une anode comprenant un matériau d'anode actif et un électrolyte, dans lequel le matériau de cathode actif ou le matériau d'anode actif comprend le matériau d'électrode actif selon l'une quelconque des revendications 1 à 11.

13. Un procédé de préparation d'un composite à base d'oxyde de silicium poreux selon la revendication 1, le procédé consistant à :
revêtir la surface des particules d'oxyde de silicium poreux avec du carbone ; et
mélanger les particules revêtues avec un précurseur du lithium pour préparer un mélange ; et
traiter le mélange à chaud.

14. Le procédé selon la revendication 13, dans lequel le précurseur du lithium est sélectionné dans le groupe constitué de LiOH-H₂O, LiCl, LiCH₃COO, 2H₂O, Li₂SO₄, Li₃PO₄, et des sels de ces derniers.

15. Le procédé selon la revendication 13, dans lequel le traitement à chaud est effectué entre 500 et 1200°C pendant 2 à 10 heures,

16. Le procédé selon la revendication 13, dans lequel un processus de préparation des particules d'oxyde de silicium poreux consiste à :
mélanger une solution à base de fluor avec une solution de précurseur du lithium pour prépare une solution mélangée, et
amener la solution mélangée en contact avec des particules de SiOₓ (0<x<2) pour déposer un métal par électrolyse sur la surface des particules de SiOₓ ;
graver les particules de SiOₓ déposées par électrolyse de particules de métal par contact avec une solution de gravure ; et
retirer les particules de métal des particules de SiOₓ gravées par contact avec une solution de retrait de métal.

17. Le procédé selon la revendication 16, dans lequel le processus de préparation de l'oxyde de silicium poreux consiste en outre à :
après avoir retiré les particules de métal, mélanger les particules de SiOₓ avec un solvant polaire contenant un hydroxyde alcalin dissous dans celui-ci,
évaporer le solvant polaire des particules de SiOₓ mélangées avec le solvant polaire ; et puis
chauffer les particules de SiOₓ.
